# EUROPÄISCHE PATENTANMELDUNG

(11) **EP 1 505 313 A2**
(43) Veröffentlichungstag der Anmeldung: **09.02.2005**
(21) Anmeldenummer: 04018212.3
(22) Anmeldetag: 31.07.2004
(51) Int. Cl.: F16F 9/32

(54) **Schwingungsdämpfer in Leichtbauweise**

(30) Priorität: 07.08.2003 DE 10336151
(71) Anmelder: ZF FRIEDRICHSHAFEN AG, 88046 Friedrichshafen (DE)
(72) Erfinder: Lutz, Dieter, 97422 Schweinfurt (DE)

(57) **Zusammenfassung**

Rohrkörper für Schwingungsdämpfer, in dem eine Kolbenstange axial beweglich angeordnet ist, wobei der Rohrkörper ein Anschlusselement trägt, das den Rohrkörper zumindest teilweise ringförmig umschließt, wobei der Rohrkörper mehrere Längenabschnitte mit unterschiedlichem Durchmessern aufweist, wobei der Rohrkörper im Kontaktbereich mit dem Anschlusselement den größten Durchmesser aufweist.

## Beschreibung

Die Erfindung betrifft einen Schwingungsdämpfer gemäß dem Oberbegriff von Patentanspruch 1.

Um das Fahrzeuggesamtgewicht trotz umfangreicher Ausstattung nicht weiter ansteigen zu lassen, wächst das Bedürfnis kostengünstige und trotzdem leichte Schwingungsdämpfer zu schaffen. Eine bekannte Möglichkeit besteht darin, dass Aluminiumteile verwendet werden. Beispielhaft wird auf die DE 42 30 238 A1 verwiesen. Der in dieser Schrift beschriebene Schwingungsdämpfer verfügt über ein Behälterrohr aus Aluminium. Aluminium ist als Grundwerkstoff wesentlich teuerer als Stahlsorten und verlangt teilweise völlig andere Verarbeitungsvorgaben, so dass sich Schwingungsdämpfer mit Aluminiumkomponenten noch nicht durchgesetzt haben. Ein weiteres Problem besteht darin, ein Schwingungsdämpfer aus verschiedenen Metallen nur schwerlich der Rohstoffrückgewinnung zuführbar sind.

Aufgabe der vorliegenden Erfindung ist es, einen Schwingungsdämpfer, insbesondere ein Federbein im Hinblick auf Leichtbau zu optimieren.

Erfindungsgemäß wird die Aufgabe dadurch gelöst, dass der Rohrkörper mehrere Längenabschnitte mit unterschiedlichem Durchmessern aufweist, wobei der Rohrkörper im Kontaktbereich mit dem Anschlusselement den größten Durchmesser aufweist.

Die jeweiligen Durchmesser des Rohrkörpers sind optimal auf die jeweiligen Belastungen ausgelegt, so dass keine Materialanhäufungen vorliegen, die die Masse des Rohrkörpers negativ beeinflussen.

Weitere vorteilhafte Ausgestaltungen werden in den Unteransprüchen beschrieben.

Anhand der folgenden Figurenbeschreibung soll die Erfindung näher erläutert werden.

Es zeigt:
- Fig. 1: Schnittdarstellung durch einen Rohrkörper eines Schwingungsdämpfers
- Fig. 2: Ansicht eines Schwingungsdämpfers gemäß Fig. 1
- Fig. 3: perspektivische Darstellung des Schwingungsdämpfers nach Fig. 1
- Fig. 4: Draufsicht des Federtellers aus Fig. 1
- Fig. 5 - 8: Detaildarstellung zum Federteller aus Fig. 1

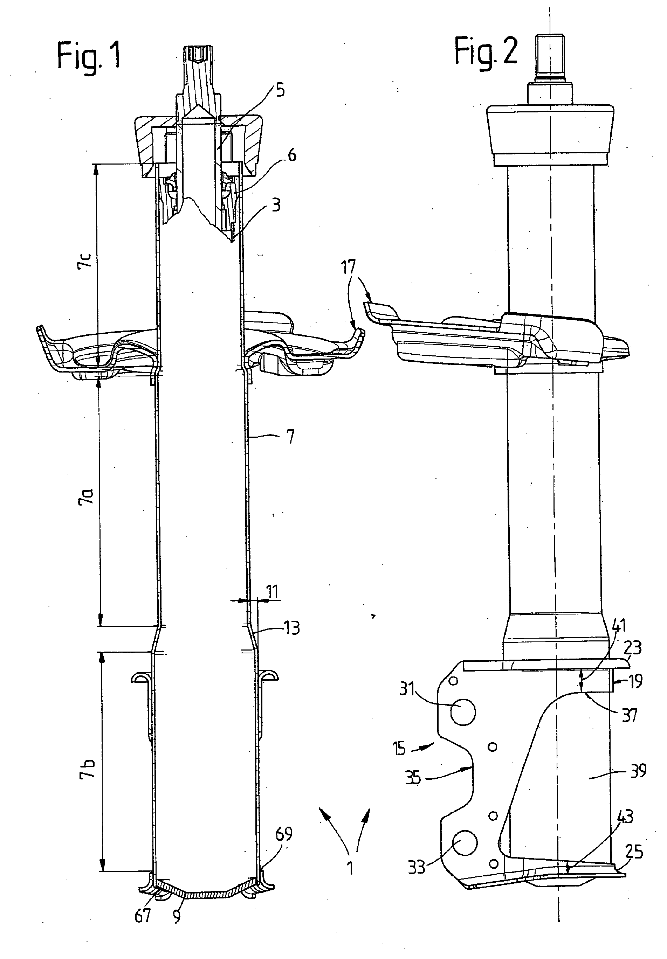

Die Fig. 1 zeigt einen Schwingungsdämpfer 1 in der Bauform eines Federbeins, bei dem innerhalb eines Zylinders 3 eine hohle Kolbenstange 5 verschiebbar geführt ist. Konzentrisch zum Zylinder ist ein Behälterrohr 7 angeordnet, dass mehrfach gestuft ausgeführt ist. Als Halbzeug dient ein Rohrkörper mit konstanter Wandstärke entsprechend dem Durchmesser in einem mittleren Längenabschnitt 7a des Rohrkörpers. Der Rohrkörper ist nach DIN 2393 geschweißt ausgeführt, wobei die Längsschweißnaht bezogen auf die Fahrtrichtung des Fahrzeugs seitlich ausgerichtet ist. Im Vergleich zu einem bekannten Schwingungsdämpfer mit 2,25 mm Wandstärke bei 52 mm Außendurchmesser weist der Rohrkörper im Ausgangszustand eine Wandstärke von nur 1,5 mm auf. In Richtung eines Bodens 9 des Behälterrohres ist eine Durchmesservergrößerung 11 in Verbindung mit einem konischen Übergangsabschnitt 13 vorgenommen worden, um die über ein Anschlusselement 15 eingeleitete Belastung besser aufnehmen zu können. Mit der Durchmesservergrößerung kann durch den Umformvorgang eine deutliche Materialverfestigung erreicht werden, die die Verwendung einer dünneren Wandstärke des Behälterrohres begünstigt. Die Durchmesservergrößerung wird mit einem Stempel bei gleichzeitiger axialer Vorspannung des Rohrkörpers vorgenommen. Dabei wird die Wandstärke gleichmäßig um ca. 0,1 mm vergrößert. Bei einer Durchmesserverkleinerung ausgehend von einem unteren Längenabschnitt 7b des Behälterrohres wäre keine so deutliche Festigkeitssteigerung erzielt worden.

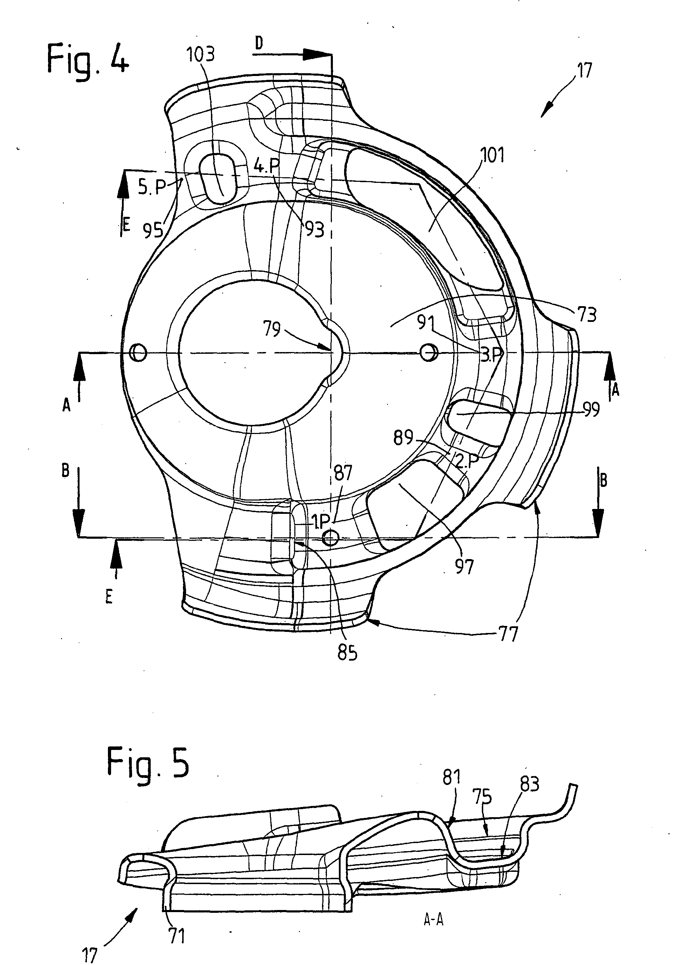

Auf einem Absatz zwischen dem mittleren Längenabschnitt 7a und einem oberen Längenabschnitt 7c mit einem eingezogenen Durchmesser stützt sich ein Federteller 17 für eine nicht dargestellte Tragfeder ab. Der Absatz für den Federteller sollte bevorzugt einen Winkel von ca. 30° bis 45° aufweisen, um die zusätzliche radiale Belastung des Rohrkörpers durch den Federteller zu verringern. Der Federteller 17 geht über eine Befestigungshülse 71, s. Fig. 5, eine Presspassung ein, wobei die Wandstärke des Federtellers größer ist als die Wandstärkre des Rohrkörpers, so dass der Rohrkörper aufgrund der Presspassung die größere Vorspannung erfährt. Die konischen Absätze zwischen den Abschnitte 7b, 7a und 7a; 7c wirken als Ringfedern, die einerseits radialverfestigende Eigenschaften besitzen und andererseits durch die axial höhere Elastizität die Vorspannung, insbesondere für den Verrollvorgang des Behälterrohres, am oberen Ende im Bereich einer Kolbenstangenführung 6 begünstigen. Zum Verrollen von Behälterrohren wird auf die DE 41 12 956 A1 verwiesen.

Der obere Längenabschnitt 7a wird ausgehend von dem Nenndurchmesser des Längenabschnitts 7b durch ein Reduzierverfahren erreicht. Man erhält den Vorteil, dass einerseits eine leichtere, weil kleinere, Kolbenstangenführung verwendet wird und andererseits die Biegeweichheit des Behälterrohres gefördert wird, so dass ein Verklemmen der Kolbenstange innerhalb der Kolbenstangenführung verringert wird. Im Rahmen des Reduzierverfahrens kann die Wandstärke im Längenabschnitt 7c in einem gewissen Maße verringert werden. Insgesamt erhält man dadurch ein konstantes Spannungsniveau innerhalb des Rohrkörpers.

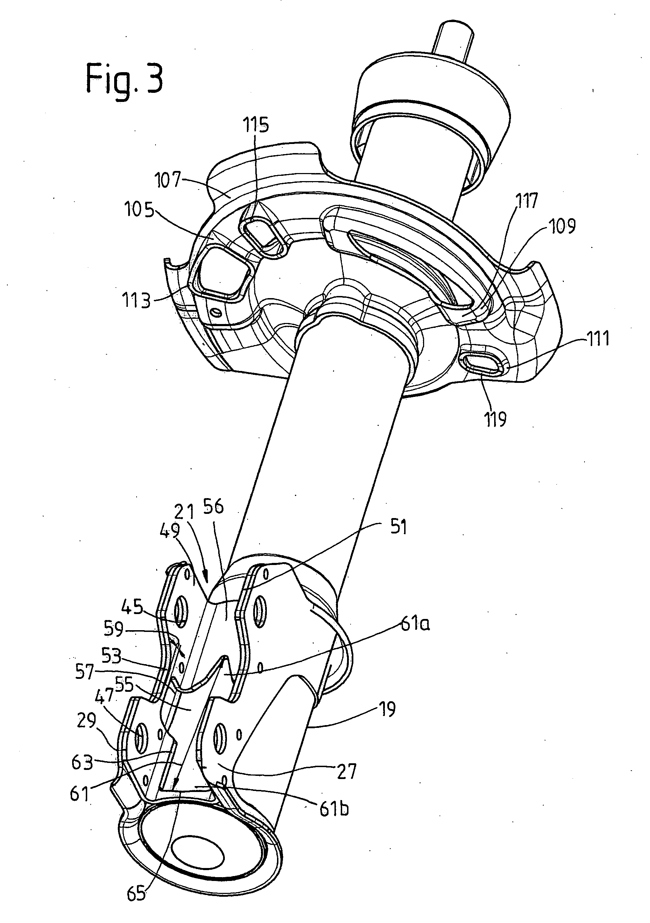

Wie aus der Zusammenschau der Fig. 2 und 3 ersichtlich ist, umfasst das Anschlusselement 15 ein äußeres, dem Durchmesser des Rohrkörpers angepasstes Schalenteil 19 und ein inneres, im wesentlichen u-förmiges Stützteil 21. Ein oberer und der unterer Rand 23; 25 des Schalenteils sind zu einem umlaufenden Kragen umgeformt, um in diesem Bereich eine Festigkeitssteigerung zu erzielen. Der obere Kragen ist bevorzugt zwischen 90° und 180° eingezogen. Damit ist gewährleistet, dass an der Stelle der höchsten Beanspruchung keine Kerbspannungen vorhanden sind. Durch die Einrollung wird im Vergleich zu herkömmlichen Kragen ein genauerer Kreisquerschnitt im oberen Einspannbereich erreicht. Die dünne Wandstärke des Anschlusselements 15 im Vergleich zu üblichen Wandstärken gestattet ein besseres Anschmiegen des Anschlusselements an den Rohrkörper. Von dem äußeren Schalenteil erstrecken sich radial zwei parallele Stege 27; 29 mit jeweils zwei Durchgangsöffnungen 31; 33 für Befestigungsmittel. Am vorderen Rand der Stege axial zwischen den Durchgangsöffnungen 31;33 ist eine Aussparung 35 vorgenommen worden, um eine Gewichtsreduzierung zu erreichen. Auch der Bereich des äußeren Schalenteils 19 zwischen dem oberen und unteren Rand 23; 25 ist mit einer Öffnung 37 versehen, die sich bis in die Stege 27; 29 erstrecken kann und einen den Stegen gegenüberliegenden Bereich 39 des unteren Längenabschnitts 7b vom Behälterrohr 7 freigibt, um z. B. einen Befestigungspunkt für beliebige Anbauteile am Behälterrohr zu ermöglichen. Ein Steg 41 zwischen dem oberen Rand 23 und der Öffnung 37 ist größer als ein Steg 43 zwischen dem unteren Rand 25 und der Öffnung 39. Des weiteren ist der Umfangswinkel der Öffnung 37 in Richtung des oberen Randes 23 kleiner als am unteren Rand 25 der Öffnung 37, so dass die Öffnung 37 in einer Abwicklung des äußeren Schalenteils 19 eine trapezähnliche Form aufweisen würde. Diese besondere Form der Öffnung berücksichtigt die Tatsache, dass die auftretenden Spannungen am oberen Steg 41 größer sind als am unteren Steg 43.

Das u-förmige Stützteil verfügt ebenfalls über Durchgangsöffnungen 45; 47 in seinen parallel verlaufenden Schenkeln 49; 51, die mit den Durchgangsöffnungen 31; 33 im Schalenteil 19 deckungsgleich angeordnet sind. Des Weiteren wurde eine gleiche Aussparung 53 zwischen den Durchgangsöffnungen 45; 47 vorgenommen. Als weiteres Maßnahme zur Gewichtsreduzierung verfügt ein Grundschenkel 56 des Stützkörpers über eine kreuzähnliche Öffnung 55. Ein horizontaler Öffnungsbereich 57 kann sich bis in die parallel verlaufenden Schenkel 49; 51 erstrecken, so dass nur noch ein schmaler Steg 59 zu den Aussparungen 53 in den Schenkeln 49; 51 besteht. Für einen vertikalen Öffnungsbereich 61 ergibt sich eine unterschiedliche Geometrie bezogen auf die Flächenanteile 61 a; 61 b ober- und unterhalb des horizontalen Öffnungsbereichs 57. Der untere Öffnungsbereich 61 b verfügt über im wesentlichen parallel verlaufende vertikale Schnittkanten 63 in Verbindung mit einer unteren tendenziell horizontal verlaufenden untere Schnittkante 65. Im oberen Öffnungsbereich 61 a verringert sich die Öffnungsbreite mit zunehmendem Abstand von dem horizontalen Öffnungsbereich 57. In diesem Fall ist der obere Öffnungsbereich 61 a als ein Dreieck mit entsprechenden Übergangsradien ausgeführt. Tendenziell sollte der untere Rand 25 des Anschlusselements 15 möglichst nahe am Boden 9 ausgeführt sein. Dadurch lässt verringern sich die Spannungen in der Schweißnaht 67 wesentlich. Des weiteren kann der unterer Steg 43 stärker dimensioniert werden.

Das Anschlusselement ist zwar am Behälterrohr 7 über das äußere Schalenteil 19 und den Grundschenkel 56 des Stützteils 21 mit einer Presspassung befestigt, doch kann zwischen dem Boden 9 des Behälterrohres 7 und dem unteren Steg 43 eine Schweißnaht 67 vorgenommen werden. Ggf. kann man eine Dreifachnaht Boden-Rohrkörper-Schalenteil 19 vornehmen. Zusätzlich kann man in die Öffnung 37 des Schalenteils 19 eine Schweißnaht 69 zum Behälterrohr 7 ausführen. (Fig. 1)

Die Verschweißung des Anschlusselements 15 erfolgt in einer Vorrichtung, bei der das Abstandsmaß zwischen dem Federteller und den Durchgangsöffnungen 31; 33 eingestellt wird. Etwaige Längentoleranzen machen sich als Längenänderung im Bereich unterhalb des Anschlusselements 15 bemerkbar. Durch die Verwendung von Laserschneideinrichtungen kann die Längenabweichung sehr klein gehalten werden, wobei die Enden des Rohrkörpers dann für eine Fase nicht mehr mechanisch nachbearbeitet werden muss. Der Absatz 13 sollte in einem gewissen Abstand zur Oberkante des Anschlusselements 15 ausgeführt sein. Ein Abstand von 8 bis 15 mm hat sich als vorteilhaft herausgestellt. Der Winkel des Absatzes sollte ca. 15° betragen, damit keine zusätzlichen Spannungen in den Rohrkörper eingeleitet werden. Die Durchmesserveränderungen für die Längenabschnitte 7b; 7c können in einer Vorrichtung vorgenommen werden.

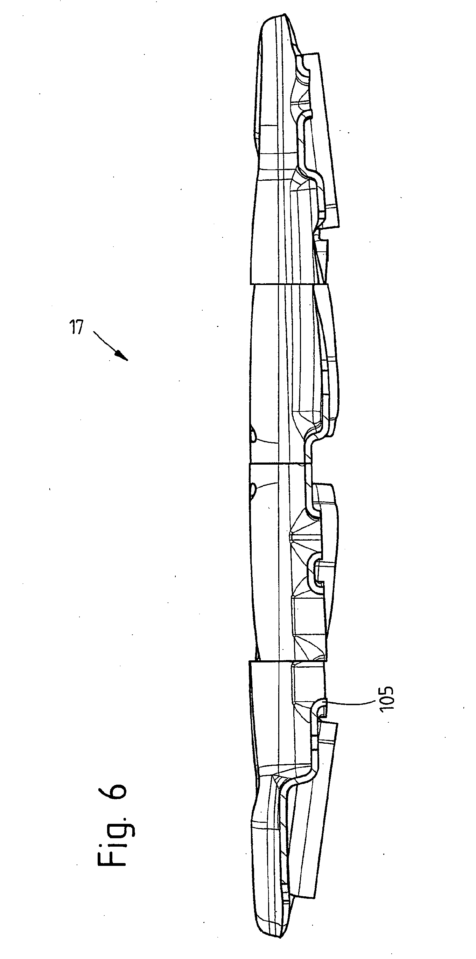

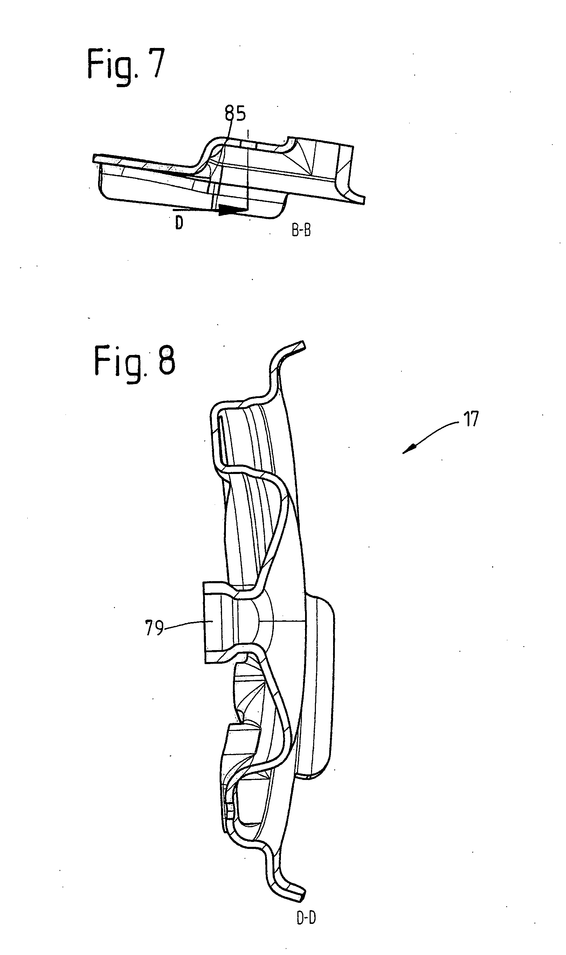

Weitere Maßnahmen zur Gewichtsreduzierung des Schwingungsdämpfers sind, wie aus den Fig. 4 bis 8 ersichtlich ist, am Federteller 17 ausgeführt. Einer Befestigungshülse 71 des Federtellers 17 schließt sich eine kreisringförmige geschlossene Halteplatte 73 mit einem rinnenförmigen Übergang 75 zu einem segmentartigen hochgezogenen Rand 77 an, der als Federstützeinrichtung im Falle eines Federbruchs fungiert. Die Federstützeinrichtung ist auf einem Umfangsbereich in Richtung eines nicht dargestellten Rades angeordnet.

Die Befestigungshülse 71 verfügt über eine axial verlaufende Rinne 79, die einerseits dem Wasserablauf aus dem Federteller dient, andererseits aber auch Spannungsspitzen zwischen dem Behälterrohr und dem Rohrkörper reduzieren soll, indem diese Rinne zumindest geringfügig elastische Eigenschaften aufweist. Neben einer einfachen Rinne 79 können auch mehrere ausgeführt sein. Mit einer radial innen liegenden Stützfläche 81 des rinnenförmigen Übergangs 75 wird eine radiale Führung der Feder an ihrem Innendurchmesser erreicht. Eine Rinnengrundfläche 83 bietet ausgehend von einem Endanschlag 85 für die Feder eine Anzahl von Auflageflächen 87; 89; 91; 43; 95, in diesem Fall fünf, die durch in Umfangsrichtung verlaufende Fenster 97; 99; 101; 103 innerhalb der Rinnengrundfläche 83 getrennt sind. Der Endanschlag 85 kann auch von einer einfachen Zunge gebildet werden, die aus der Rinnengrundfläche 83 freigeschnitten und im wesentlichen senkrecht hochgebogen wird. Die Auflageflächen 87 bis 95 können ggf. nach innen oder außen geneigt sein oder auch verschiedene Höhenlagen aufweisen, um möglichst wenig Reibung zwischen der Feder und dem Federteller auftreten zu lassen. Zwischen dem Endanschlag 85 und einem ersten Fenster 97 ist eine vergleichsweise großflächige Auflagefläche 87 ausgeführt, hingegen kann die zweite Auflagefläche 89 deutlich kleiner dimensioniert werden, da wiederum die dritte und vierte Auflagefläche 91; 93 annähernd die Ausdehnung wie die erste aufweisen und in etwa jeweils um 90° versetzt angeordnet sind, so dass für die Feder eine gleichmäßige Abstützung vorliegt. Die Fenster 97; 93; 101; 103 sind wiederum von Kaminen 105; 107, 109, 111 Fig. 3) eingefasst, deren axiale Stirnflächen 113; 115; 117; 119 tiefer liegen als die Rinnengrundfläche 83. Der Übergang von der Rinnengrundfläche 83 zu den Kaminen 105 - 111 ist wiederum konisch ausgeführt. Diese Kamine wirken sich außerordentlich versteifend auf den Federteller aus. Je nach Krafteinleitung kann es erforderlich sein, dass das Fenster 101 einen kleineren Flächenanteil einnimmt als der Kamin 109, wie es z. B. zwischen der dritten und einen vierten Auflagefläche 91; 93 erkennbar ist. Bei diesem Fenster wurde eine im wesentlichen trapezförmige Form gewählt, wobei in Richtung der innenliegenden Stützwand 81 ein deutlich größerer Übergangsradius zu den radial verlaufenden Kanten gewählt als am Außendurchmesser des Fensters.

Insgesamt führen die besonderen Ausgestaltungen am Behälterrohr, Anschlusselement und Federteller zu einer im Vergleich zu einem konventionellen Schwingungsdämpfer erheblichen Gewichtseinsparung, bei einem Mustermodell wurden ca. 25% gegenüber einer herkömmlichen Serienkonstruktion erreicht, ohne dass Kompromisse im Hinblick auf Festigkeitsanforderungen eingegangen werden müssen.

## Patentansprüche

1. Rohrkörper für Schwingungsdämpfer, in dem eine Kolbenstange axial beweglich angeordnet ist, wobei der Rohrkörper ein Anschlusselement trägt, das den Rohrkörper zumindest teilweise ringförmig umschließt,
**dadurch gekennzeichnet,**
**dass** der Rohrkörper (7) mehrere Längenabschnitte (7a; 7b; 7c) mit unterschiedlichem Durchmessern aufweist, wobei der Rohrkörper (7) im Kontaktbereich mit dem Anschlusselement (15) den größten Durchmesser aufweist.

2. Rohrkörper nach Anspruch 1,
**dadurch gekennzeichnet,**
**dass** der Rohrkörper (7) als Halbzeug mit konstanter Wandstärke ausgeführt ist.

3. Rohrkörper nach Anspruch 1,
**dadurch gekennzeichnet,**
**dass** der Rohrkörper (7) längsgeschweißt ist

4. Rohrkörper nach Anspruch 3,
**dadurch gekennzeichnet,**
**dass** die Längsschweißnaht bezogen auf die Fahrtrichtung seitlich ausgerichtet.

5. Rohrkörper nach Anspruch 1,
**dadurch gekennzeichnet,**
**dass** zwischen dem Längenabschnitt (7a) mit einem Nenndurchmesser und dem Längenabschnitt (7b) in Richtung des Bodens (9) unter axialer Vorspannung des Rohrkörpers (7) eine Durchmesservergrößerung in Verbindung mit einer Wandstärkenvergrößerung ausgeführt ist.

6. Rohrkörper nach Anspruch 1,
**dadurch gekennzeichnet,**
**dass** zwischen den beiden Längenabschnitten (7a; 7b) ein konischer Übergangsabschnitt (13) ausgeführt ist.

7. Rohrkörper nach Anspruch 1,
**dadurch gekennzeichnet,**
**dass** zwischen dem Anschlusselement (15) und dem konischen Übergangsabschnitt (13) ein Abstand vorliegt.

8. Rohrkörper nach Anspruch 1,
**dadurch gekennzeichnet,**
**dass** der Längenabschnitt (7c) in Richtung einer Kolbenstangenführung (6) ausgehend von dem Nenndurchmesser des Längenabschnitts (7a) in seinem Durchmesser reduziert ist.

9. Rohrkörper nach Anspruch 8,
**dadurch gekennzeichnet,**
**dass** die Wandstärke im Vergleich zur Ausgangswandstärke im Längenabschnitt (7c) verringert ist.

10. Rohrkörper nach Anspruch 1,
**dadurch gekennzeichnet,**
**dass** sich auf einem Absatz zwischen dem beiden Längenabschnitten (7a; 7c) ein Federteller (17) abstützt.

11. Rohrkörper nach Anspruch 10,
**dadurch gekennzeichnet,**
**dass** der Längenabschnitt (7a) mit dem Federteller (17) eine Presspassung eingeht.

12. Rohrkörper nach Anspruch 10,
**dadurch gekennzeichnet,**
**dass** die Wandstärke des Federtellers (17) größer ist als die Wandstärke des Rohrkörpers im Längenabschnitt (7a).

13. Rohrkörper nach Anspruch 1,
**dadurch gekennzeichnet,**
**dass** das das Anschlusselement (15) ein äußeres, dem Durchmesser des Rohrkörpers (7) angepasstes Schalenteil (19) und ein inneres, im wesentlichen u-förmiges Stützteil (21) umfasst, wobei zumindest ein oberer Rand (23) zu einem umlaufender Kragen größer als 90° umgeformt ist.

14. Rohrkörper nach Anspruch 13,
**dadurch gekennzeichnet,**
**dass** sich von dem äußeren Schalenteil (19) sich radial zwei parallele Stege (27; 29) mit jeweils zwei Durchgangsöffnungen (31; 33) für Befestigungsmittel erstrecken, wobei an einem vorderen Rand der Stege axial zwischen den Durchgangsöffnungen (31 ;33) eine Aussparung 35 ausgeführt ist.

15. Rohrkörper nach Anspruch 13,
**dadurch gekennzeichnet,**
**dass** der Bereich des äußeren Schalenteils (19) zwischen dem oberen und unteren Rand (23; 25) mit einer Öffnung (37) versehen ist.

16. Rohrkörper nach Anspruch 15,
**dadurch gekennzeichnet,**
**dass** sich die Öffnung (37) bis in die Stege (27; 29) erstreckt und einen den Stegen (27; 29) gegenüberliegenden Bereich (39) des unteren Längenabschnitts (7b) vom Rohrkörper (7) freigibt.

17. Rohrkörper nach Anspruch,
**dadurch gekennzeichnet,**
**dass** ein Steg (41) zwischen dem oberen Rand (23) des äußeren Schaltenteils (19) und der Öffnung (37) größer ist als ein Steg (43) zwischen dem unteren Rand (25) und der Öffnung (39).

18. Rohrkörper nach Anspruch 15,
**dadurch gekennzeichnet,**
**dass** der Umfangswinkel der Öffnung (37) in Richtung des oberen Randes (23) kleiner als am unteren Rand (25) der Öffnung 37, so dass die Öffnung (37) in einer Abwicklung des äußeren Schalenteils (19) eine trapezähnliche Form aufweisen würde.

19. Rohrkörper nach Anspruch 13,
**dadurch gekennzeichnet,**
**dass** ein Grundschenkel (56) des Stützkörpers (21) über eine kreuzähnliche Öffnung (55) verfügt.

20. Rohrkörper nach Anspruch 19,
**dadurch gekennzeichnet,**
**dass** ein horizontaler Öffnungsbereich (57) der Öffnung (55) erstreckt sich bis in die parallel verlaufenden Schenkel (49; 51).

21. Rohrkörper nach Anspruch 20,
**dadurch gekennzeichnet,**
**dass** ein vertikaler Öffnungsbereich (61a; 61b) im Stützkörper (21) erstrek sich ober- und unterhalb des horizontalen Öffnungsbereichs (57).

22. Rohrkörper nach Anspruch 21,
**dadurch gekennzeichnet,**
**dass** der untere Öffnungsbereich (61b) über im wesentlichen parallel verlaufende vertikale Schnittkanten (63) in Verbindung mit einer unteren tendenziell horizontal verlaufenden untere Schnittkante (65) verfügt.

23. Rohrkörper nach Anspruch 21,
**dadurch gekennzeichnet,**
**dass** sich im oberen Öffnungsbereich (61a) die Öffnungsbreite mit zunehmendem Abstand von dem horizontalen Öffnungsbereich (57) verringert.

24. Rohrkörper nach Anspruch 1,
**dadurch gekennzeichnet,**
**dass** ein Federteller (17) am Rohrkörper (7) eine kreisringförmige geschlossene Halteplatte (73) mit einem rinnenförmigen Übergang (75) zu einem segmentartigen hochgezogenen Rand (77) aufweist, der als Federstützeinrichtung im Falle eines Federbruchs fungiert.

25. Rohrkörper nach Anspruch 24,
**dadurch gekennzeichnet,**
**dass** eine radial innen liegenden Stützfläche (81) des rinnenförmigen Übergangs (75) eine radiale Führung der Feder an ihrem Innendurchmesser bildet.

26. Rohrkörper nach Anspruch 24,
**dadurch gekennzeichnet,**
**dass** eine Rinnengrundfläche (83) ausgehend von einem Endanschlag (85) für die Feder bietet.

27. Rohrkörper nach Anspruch 24 ,
**dadurch gekennzeichnet,**
**dass** eine Anzahl von Auflageflächen (87; 89; 91; 43; 95) durch in Umfangsrichtung verlaufende Fenster (97; 99; 101; 103) innerhalb der Rinnengrundfläche (83) getrennt sind.

28. Rohrkörper nach Anspruch 27,
**dadurch gekennzeichnet,**
**dass** die Auflageflächen (87 bis 95) nach innen oder außen geneigt sind.

29. Rohrkörper nach Anspruch 27,
**dadurch gekennzeichnet,**
**dass** die Fenster (97; 93; 101; 103) von Kaminen (105; 107, 109, 111 ) eingefasst sind, deren axiale Stirnflächen (113; 115; 117; 119) tiefer liegen als die Rinnengrundfläche (83) .

30. Rohrkörper nach Anspruch 29,
**dadurch gekennzeichnet,**
**dass** ein Übergang von der Rinnengrundfläche (83) zu den Kaminen (105 - 111) konisch ausgeführt ist.

31. Rohrkörper nach Anspruch 29,
**dadurch gekennzeichnet,**
**dass** das Fenster (101) einen kleineren Flächenanteil einnimmt als der Kamin (109).
